(19) Europäisches Patentamt
European Patent Office
Office européen des brevets

(11) Publication number: **0 005 981**
**B1**

(12) **EUROPEAN PATENT SPECIFICATION**

(45) Date of publication of patent specification: **15.09.82**

(51) Int. Cl.³: **C 01 D 7/40**

(21) Application number: **79300967.1**

(22) Date of filing: **29.05.79**

(54) **Carbonation process for the manufacture of sodium bicarbonate.**

(30) Priority: **30.05.78 US 910976**

(43) Date of publication of application:
**12.12.79 Bulletin 79/25**

(45) Publication of the grant of the patent:
**15.09.82 Bulletin 82/37**

(84) Designated Contracting States:
**BE CH DE FR GB NL SE**

(56) References cited:
**US - A - 2 704 239**
**US - A - 3 113 834**
**US - A - 3 131 996**
**US - A - 3 233 983**
**US - A - 3 459 497**
**US - A - 3 705 790**

(73) Proprietor: **STAUFFER CHEMICAL COMPANY**
**Westport Connecticut 06880 (US)**

(72) Inventor: **Sih, Ping Heui**
**2717 Topaz Drive**
**Novato California 94947 (US)**
Inventor: **Cortessis, Peter George**
**1642 Reliez Valley Road**
**Lafayette California (US)**
Inventor: **Christiansen, David Ernest**
**38 Greendell Place**
**Pleasant Hill California 94530 (US)**
Inventor: **Cieski, William John**
**340 Bertano Way**
**Greenbrae California (US)**

(74) Representative: **Smith, Sydney et al,**
**Elkington and Fife High Holborn House 52/54**
**High Holborn**
**London WC1V 6SH (GB)**

**EP 0 005 981 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Carbonation process for the manufacture of sodium bicarbonate

This invention relates to a process for producing sodium bicarbonate by reacting carbon dioxide with a solution of sodium carbonate and sodium bicarbonate or a slurry of sodium bicarbonate in a saturated solution of sodium carbonate and sodium bicarbonate, more particularly the invention relates to a process for producing sodium bicarbonate of controlled crystal size, habit and bulk density, more specifically for producing sodium bicarbonate having large crystals and a high bulk density.

Sodium bicarbonate is used in baking powders, antacid powders, water treatment chemicals, fire extinguisher material, laundry detergents and several other chemicals. In several of these uses, such as antacid powders, large crystals (60—100 mesh size U.S. standard sieve) are desired by manufacturers. Also, crystals having a high bulk density (around 960 $kg/m^3$ (60 $lbs/ft^3$)) are desired for several uses.

U.S. Patent No. 2,704,239 relates to a recycling system for the production of sodium bicarbonate from crude trona by crystallization of sodium bicarbonate from an aqueous solution of trona which comprises dissolving crude trona in an unsaturated aqueous mother solution of sodium carbonate and sodium bicarbonate composed principally of a recycled solution of sodium carbonate and sodium bicarbonate at a temperature between about 20 and 100°C., the proportion of sodium bicarbonate to sodium carbonate in said mother solution at equilibrium ranging by weight from at least about 4.6:20 at 20°C. to at least about 18:16 at 100°C., adding $CO_2$ to the system during each cycle in an amount substantially equal to the amount necessary to convert the sodium carbonate of the trona dissolved during said cycle into sodium bicarbonate and to maintain the recycling aqueous solution of said cycle containing the dissolved trona in a concentration within the

$$Na_2CO_3 \cdot NaHCO_3 \cdot H_2O$$

system at which sodium bicarbonate is the stable crystal phase in the surrounding liquor, crystallizing sodium bicarbonate from the solution containing the dissolved trona, separating the crystallized sodium bicarbonate from the system, and returning the resulting mother liquor to the system for recycling.

U.S. Patent No. 3,705,790 relates to an improved process for the preparation of sodium carbonate precursor crystals by a crystallization process which involves forming a first crop of said carbonate precursor crystals from a substantially saturated carbonate process solution and providing in the mother liquor separated from said first crop of crystals a sufficient amount of calcium ions such that when the mother liquor is subjected to crystallization at a temperature higher than that employed to obtain the first crop of said precursor crystals, a second crop of sodium carbonate precursor crystals of improved quality is obtained.

Commercially, at alkali plants, refined sodium bicarbonate is made by redissolving the final soda ash or else by starting with a soda ash solution made by "wet calcination" of the crude bicarbonate. A sodium carbonate feed solution is fed into the top of a carbonation tower while purified kiln gas with approximately 40% $CO_2$ is passed countercurrent to the flow of solution through the tower to its top where unreacted $CO_2$ is lost to the atmosphere along with air. Carbon dioxide absorption efficiency in these carbonation towers is thus relatively low with 10—30 percent loss of $CO_2$ to the atmosphere with the tower effluent gases. Such towers utilize high amounts of energy for cooling coils located in the towers which are necessary to cool the carbonate solution and to remove the heat of reaction. A slurry of sodium bicarbonate crystals is formed within the tower, is removed from the bottom, filtered, predried by centrifugation and final-dried in heated air-swept dryers. The filtrate from the filters is used to dissolve more fresh soda or to heat up the slurry of crude sodium bicarbonate being fed to the steam stripping stills.

Unfortunately, the cooling coils which are present in these towers are prone to salting and frequent shutdowns for wash outs and maintenance for the removal of scale and the like. These wash outs cause a water balance problem in the plant. In addition, this process predominantly yields agglomerates or acicular crystals or fragments thereof, which are not suitable for many industrial purposes.

The principal object of the present invention is to produce sodium bicarbonate of controlled crystal size, habit and bulk density. Other objects of the present invention are (1) to provide a carbonation process for producing sodium bicarbonate in which crystal size from small to the very desirable large can be controlled (2) to provide such a process which does not have the water balance problems discussed above for present commercial processes (3) to provide such a process that conserves energy since only a minimum amount of heating is required and (4) to provide such a process which is more economical and efficient than said present commercial processes with high on-steam time or less maintenance.

More specifically, the process of the present invention has several advantages over presently used commercial processes for the manufacture of sodium bicarbonate. One of these is that the process has no aqueous waste stream which would pollute the surrounding environment. The water utilized in the process is continuously recycled and in fact the process is a net water user. The needed make-up water can be conveniently added during routine cleaning operations.

Also, the present invention has the economic advantage that only a minimum amount of carbon dioxide gas is lost to the atmosphere during operation.

Further, and very importantly, the process of the present invention has the advantage that only a minimum amount of energy is required for any heating steps or the one cooling step described hereinafter.

An embodiment of the present invention is directed to a process for producing sodium bicarbonate by carbonating a saturated solution of sodium carbonate and sodium bicarbonate or a slurry of sodium bicarbonate in a saturated solution of sodium carbonate and sodium bicarbonate. The carbonation is carried out in a well-stirred reactor in the presence of sufficient $Ca^{++}$ ion so that certain specified amounts of $Ca^{++}$ ion are found in the produced sodium bicarbonate.

Carbon dioxide gas is dispersed into said slurry or solution and the sodium carbonate thereof is converted to sodium bicarbonate by the following reaction:

$$Na_2CO_3 + CO_2 + H_2O \rightarrow 2NaHCO_3$$

Generally, the overall process of one embodiment of this invention comprises:

A. Dissolving a feed in an unsaturated solution of sodium carbonate and sodium bicarbonate to form a saturated solution of sodium carbonate and sodium bicarbonate in specified weight ratios, or adding a feed to a saturated solution of sodium carbonate and sodium bicarbonate to form a slurry of sodium bicarbonate solution of sodium carbonate and sodium bicarbonate in certain specified weight ratios. Said feed is either sodium carbonate (soda ash); sodium sesquicarbonate; the several hydrates of sodium carbonate such as sodium carbonate monohydrate, sodium carbonate heptahydrate and sodium carbonate decahydrate- or even trona ore that has had insoluble impurities such as shale removed or mixtures thereof. The preferred feed is sodium carbonate (soda ash).

B. Carbonating said solution or slurry within a certain specified temperature range in the presence of sufficient $Ca^{++}$ ion so that certain specified amounts of $Ca^{++}$ ion is found in the crystallised sodium bicarbonate.

C. Separating the crystallised sodium bicarbonate crystals from the mother liquor which is a saturated solution of sodium carbonate and sodium bicarbonate.

D. Recycling said mother liquor so that it may be utilised in process step A.

An additional process step not embodied in the present invention is the drying of the separated sodium bicarbonate crystals by conventional techniques.

The carbonation of the solution or slurry containing sodium carbonate with carbon dioxide gas and crystallization of the desired sodium bicarbonate having the desired crystal size and shape can best be understood by reference to the drawings in which:—

Figure 1 is a flow sheet showing an embodiment of the present invention.

Figure 2 is a front elevational view, partially cut away, of reactor 45 shown in Figure 1.

In general, the process of the present invention utilises apparatus comprising: (1) a mixing tank 20; (2) a heat exchanger 28; (3) crystallizer 45; (4) heat exchanger 79 and (5) rotary vacuum filter 92.

The sodium carbonate useful in the practice of this invention can come from any of the synthetic or natural sources. Synthetic processes include the well-known Solvay process.

One natural source of sodium carbonate and/or sodium bicarbonate values which has been suggested for the production of sodium bicarbonate is trona. Crude trona, for example, from the state of Wyoming, consists of about 94% to 96% sodium sesquicarbonate

$$(NaCO_3 \cdot NaHCO_3 \cdot 2H_2O)$$

mixed with about 4% to 6% insoluble impurities and contains small amounts of iron, sulfates, chlorides, etc.

Trona has been mainly used to produce sodium carbonate (soda ash) by a variety of processes which basically consist of dissolving crude trona or calcined crude trona in an aqueous solvent, separating the insoluble impurities therefrom, crystallizing sodium sesquicarbonate or sodium carbonate monohydrate from the solution, separating the crystals from the mother liquor and calcining or drying the crystals to produce soda ash.

The carbon dioxide gas can be in the form of pure $CO_2$ or it can be a mixture with any inert gas such as air such as is found in kiln or flue gas.

When pure $CO_2$ gas is fed to crystallizer 45, a unique feature of this invention is that the reaction between the $CO_2$ gas and the slurry or solution containing sodium carbonate is very efficient. In other words, substantially all $CO_2$ that is put into the crystallizer 45 is reacted with the sodium carbonate and none need be bled from crystallizer 45. When a mixture of $CO_2$ and inert gas is continuously fed, the inert gas does not dissolve in the slurry or solution containing sodium carbonate but is cycled within the crystallizer. When a mixture is continuously fed, the inert gas must be vented from crystallizer 45 to avoid excessive pressure build-up.

In a continuous operation, preferably about 1 to about 5 gram mole of $CO_2$ per liter of solution or

slurry per hour is adequate to produce large crystals of sodium bicarbonate. More preferably, about 1 to about 2 gram mole is adequate.

A sufficient amount of $Ca^{++}$ ion, preferably a dry calcium salt or solution thereof, is added to the aqueous solution or slurry from which the sodium bicarbonate is precipitated so that certain amounts of $Ca^{++}$ ion are found in the precipitated sodium bicarbonate. This amount is between about 30 to about 160 and preferably between about 50 to about 100 ppm $Ca^{++}$ ion (on a sodium bicarbonate basis) in the precipitated sodium bicarbonate. Generally, the preferred range yields food grade sodium bicarbonate crystals.

It is believed that the $Ca^{++}$ ion that is obtained in the precipitated sodium bicarbonate primarily is that that exceeds the solubility limit of $Ca^{++}$ ion in the aqueous medium from which the sodium bicarbonate is precipitated. The calcium present in the precipitated sodium bicarbonate is in the form of $CaCO_3$. We believe the $CaCO_3$ interacts in the crystallization mechanism to give the desired type crystal.

In a continuous process for preparing sodium bicarbonate such as shown in Figure 1 where mother liquor is continuously recycled, a constant amount of $Ca^{++}$ ion can be metered before the crystallization step so that the prescribed amount of $Ca^{++}$ ion can be found in the precipitated sodium bicarbonate. However, with variance in the crystallization temperature or change of the ratios of sodium carbonate and sodium bicarbonate in solution during crystallization, the amount of added $Ca^{++}$ ion must be slightly adjusted.

The addition of $Ca^{++}$ ion can be made to the crystallizer feed as herein defined at any time before or during the actual crystallization step but preferably is added into mixing tank 20 as hereinafter described.

The $Ca^{++}$ ion can be provided in the form of any salt or solution thereof. The preferred materials are any inorganic calcium salt, most preferably the salt is calcium carbonate.

The chemical composition of the saturated mother liquor that is utilized in the process of this invention is an aqueous mixture of sodium carbonate and sodium bicarbonate. These two chemical compounds, in parts by weight per 100 parts of mother liquor, can vary within the ranges recited herein depending upon the temperature of the mother liquor.

For example, at high temperatures of about 120°C, the composition can vary from about 16 parts $Na_2CO_3$ and about 16 parts $NaHCO_3$ down to about 1 part $Na_2CO_3$ and about 22 parts $NaHCO_3$ preferably down to from about 10 parts $Na_2CO_3$ and about 18 parts $NaHCO_3$.

At low temperature of about 50°C, the composition can vary from about 15 parts $Na_2CO_3$ and about 7 parts $NaHCO_3$ down to about 1 part $Na_2CO_3$ and about 12 parts $NaHCO_3$.

At very preferred temperatures between about 60°C to about 80°C, the composition can range at about 60°C between about 15 parts $Na_2CO_3$ and about 8 parts $NaHCO_3$ down to about 2 parts $Na_2CO_3$ and about 13 parts $NaHCO_3$ up to at about 80°C the ratio can range between about 15 parts $Na_2CO_3$ and about 10 parts $NaHCO_3$ down to about 2 parts $Na_2CO_3$ and about 16 parts $NaHCO_3$.

As can be ascertained, as the temperature of the mother liquor is lowered, the amount of $NaHCO_3$ that can be maintained in a saturated solution thereof correspondingly decreases.

Generally, the reaction between the carbon dioxide gas and the slurry or the solution containing the dissolved sodium carbonate should take place within a temperature range of about 50°C and about 120°C, more preferably the temperature range is between about 60°C and about 80°C, at atmospheric or super-atmospheric pressure. Preferably, the pressure should be maintained between about 0—50 psig (gauge pressure), i.e. at up to 4.55 kg/sq.cm. Generally, temperatures below 50°C are not preferred as small crystals are produced.

Referring once again to the drawings and in particular Figure 1, a feed 12 preferably sodium carbonate (soda ash) and preferably in dry form, is introduced into mixing tank 20 which is well-stirred, open and insulated. Preferably feed 12 is continuously fed by appropriate equipment such as a screw feeder (not shown). Also, mother liquor from the rotary vacuum filter 92 is added to mixing tank 20 through line 10. $Ca^{++}$ ion 14 is added to mixing tank 20 proportionately with the sodium carbonate 12. The chemical nature of the $Ca^{++}$ ion is described in detail herein and preferably it is added in dry form along with the sodium carbonate. The temperature of the prepared composition of sodium carbonate $Ca^{++}$ ion and mother liquor can be increased by circulating it through heat exchanger 28. The composition is pumped through lines 22, 26, heat exchanger 28 and line 30 by pump 24. This prepared composition hereinafter will be called the "crystallizer feed".

Essentially, the crystallizer feed can be either an aqueous solution of sodium carbonate and sodium bicarbonate exclusive of the $Ca^{++}$ ion or a slurry of sodium bicarbonate in a saturated aqueous solution of sodium carbonate and sodium bicarbonate exclusive of the $Ca^{++}$ ion.

In the case where the crystallizer feed is to be a solution, first the recycled saturated mother liquor from rotary vacuum filter 92 must be heated before the addition of the sodium carbonate 12 in mixing tank 20. The heating can be done by heat exchanger 28 as previously described. After heating, the crystallizer feed is no longer saturated. The temperature can be increased to any temperature below about 120°C, but it is preferred to increase it only about 5—20°C.

With the increase in the temperature of the mother liquor, feed 12 can be added in any amount up to that which saturates the unsaturated mother liquor.

In the other, preferred, case where it is desired that the crystallizer feed be a slurry, additional feed

is added beyond that amount necessary to resaturate the unsaturated mother liquor or in the preferred situation the temperature of the saturated mother liquor is maintained and feed 12 is added to form the slurry. When a feed of sodium carbonate or its hydrates is used, the added feed dissolves in the saturated mother liquor with the initial displacement of dissolved sodium bicarbonate. This displaced amount of sodium bicarbonate becomes slurried. With further addition of this feed, sodium bicarbonate and sodium sesquicarbonate become slurried. When sodium sesquicarbonate or trona is used as the feed, initially sodium bicarbonate will become slurried and with further addition of feed a mixture of sodium bicarbonate and sodium sesquicarbonate will become slurried. The amount of feed that can be added to the mother liquor can be very large. Preferably, sufficient sodium carbonate is added to form a slurry of up to about 5 percent sodium bicarbonate solids.

The crystallizer feed, after it has been regulated to the desired temperature, is pumped by pump 24 through lines 32 and 34 to feed tank 36 for storage, or it is directly pumped by pumps 24 and 43 to crystallizer 45 through lines 32 and 44.

Feed tank 36 is a well-stirred, closed vessel which is used as a holding tank to ensure a steady supply of crystallizer feed to crystallizer 45. Preferably, feed tank 36 is steam-jacketed in order to heat and maintain the crystallizer feed at a constant temperature.

When the crystallizer feed is needed from feed tank 36, it is passed from the bottom of feed tank 36 through line 38 by pump 40 and then through lines 41 and 44 by pump 40.

The crystallizer feed enters crystallizer 45 through port 50, preferably continuously.

Carbon dioxide gas 52 is fed into crystallizer 45 through port 51.

The construction and operation of crystallizer 45 will be hereinafter described in greater detail. For present purposes, the fed carbon dioxide gas is mixed with the aqueous material contained therein for reaction with the dissolved sodium carbonate.

Crystallizer 45 is not the only type apparatus that can be utilized as the vessel for the reaction of the carbon dioxide gas with the crystallizer feed, although it is the most preferred apparatus. Reaction vessels that are useful are any that would be classified as well-stirred vessels. These are well known to those skilled in the art and disperse the carbon dioxide gas into very small bubbles for intimate contact with the crystallizer feed.

The reaction of the carbon dioxide gas with the crystallizer feed is exothermic and the heat of reaction is removed by heat exchanger 79. For this cooling, the reaction mixture contained in crystallizer 45 is pumped therefrom through port 75, line 76, by pump 77 through line 78 to heat exchanger 79. Thereafter, the cooled reaction mixture is returned back through line 80 to port 81 where it returns back to crystallizer 45.

As the crystallizer feed is fed into crystallizer 45, sodium bicarbonate continuously precipitates and becomes suspended throughout the reaction medium. When the crystals grow to the desired size, they are removed from crystallizer 45 through port 75, line 76, line 78 and line 82 by pump 77 for storage in filter feed tank 84. Filter feed tank 84 is a closed, well-stirred vessel that is used to ensure a constant feed of precipitated sodium bicarbonate to rotary vacuum filter 92. Filter feed tank 84 is provided with a heat exchanger 88 for heating or cooling the precipitated sodium bicarbonate mixture. The material contained in filter feed tank 84 is pumped through line 86 by pump 86 and through line 87, heat exchanger 88 and line 89 back to filter feed tank 84.

Filter feed tank 84 is closed to the atmosphere to minimize carbon dioxide loss but need not be a pressure-type vessel. When needed, the precipitated sodium bicarbonate mixture is pumped by pump 86 through lines 85 and 90 to rotary vacuum filter 92.

Rotary vacuum filter 92 is a conventional piece of apparatus. A vacuum is maintained across the filter by a vacuum pump not shown. The filter separates the precipitated sodium bicarbonate as a moist filter cake from the saturated mother liquor. As stated previously, the mother liquor is returned to mixing tank 20 by line 10.

The wet sodium bicarbonate filter cake 94 can be collected, dried and sized by conventional techniques.

Again referring to the drawings, particularly Figure 2, the gas disperser 47 includes a rotor means 49 and a stator means 48. Rotor 54 is fixed to the bottom of a shaft 62 and is supported a moderate distance above the bottom of crystallizer 45 for rotation about an upright axis and preferably essentially vertical axis; rotor 54 is positively rotated through belts 65 and pulleys 66 and 67 by motor 68. The means for rotatably supporting the shaft includes bearing structure 61 fixed to a bracket 69 that also supports motor 68. Bracket 69 is attached to top wall 46.

The lower portion of stator means 48 comprises a stator structure 55 surrounding and circumferentially spaced from rotor 54. The stator structure 55 extends at least to the top of the rotor and preferably, as shown, somewhat below the top of the rotor. The stator structure preferably, as shown, has its bottom located substantially above the bottom of the rotor. The stator means 48 also includes an upper portion taking the form of an open-ended standpipe member 58 that is attached to the underside of top wall 46 and supports the stator structure 55 and also forms a conduit for the carbon dioxide gas introduced through gas inlet 51 in said top wall to the interior of stator structure 55 at the vicinity of rotor 54. Preferably, the stator means also includes a downwardly, outwardly, flaring perforated hood 56. Standpipe member 58 is provided with at least one perforation 57 to permit

carbon dioxide gas entered through port 51 and unreacted carbon dioxide that passes from the aqueous reaction medium to pass from the freeboard space there above into the interior of standpipe member 58.

Rotor means 49 and stator means 48 are described in detail in U.S. Patent 3,491,880 which is incorporated herein by reference.

Specifically, in the operation of crystallizer 45, the crystallizer feed is pumped from line 44 through port 50 and the liquid level in crystallizer 45 is maintained at a level above inlet 50 and stator structure 55 along the height of standpipe member 58 but below the underside of top wall 46. This liquid level allows for a freeboard space between the underside of top wall 46 and the liquid level. Means not shown for maintaining the liquid level at the above-described level is also provided.

Carbon dioxide gas 52 is introduced through inlet 51 to the freeboard space in the interior of standpipe member 58. The rotation of rotor 54 by motor 68 at the proper speed draws the gas to the interior of stator structure 55 at the vicinity of rotor 54. Also, most of the crystallizer feed and most of the precipitated sodium bicarbonate crystals that have formed are drawn upwardly from the lower portion of crystallizer 45 by the rotation of rotor 54 into the interior of stator structure 55. The interior of stator structure 55 constitutes a liquid-gas mixing zone.

The amount of gas drawn from the freeboard and dispersed into the liquid drawn up into rotor 54 depends directly on the speed of the rotor. An amount, for example, of about 0.125 cubic feet per gallon (about 0.0134 cu. m per litre) of liquid is normally dispersed. However, this amount does not represent that which is supplied from an outside source, as a portion of the dispersed gas is continually recycled. The amount of makeup gas added through inlet 51, coupled with the recycled gas, is sufficient to maintain a gas blanket over the liquid at a preselected pressure.

The centrifugal forces generated by the rotating rotor propel the liquid-gas mixture generally radially toward the inner surface of stator structure 55 and then through opening 59 in the stator structure. The shearing action of these openings on the liquid-gas mixture breaks the larger masses of gas in the mixture into many very small bubbles.

The bubbles flow from the circumferentially spaced opening 59 in the stator structure in stable, distinct, individual, generally radial pathways indicated by the arrows shown in Figure 2. Within these generally radial pathways, individual whorls form and move radially outward. In these whorls, the bubbles travel in individual cyclone or helical paths about generally upwardly directed axes to the surface of the liquid. This action provides excellent agitation providing well-stirred reactor conditions inside crystallizer 45.

Hood 56 also having openings is optionally provided as an aid in the above-described action and can also cause an increased path of travel of the bubbles through the liquid.

As the carbon dioxide bubbles in the whorls travel through their extended paths, they are absorbed into material contained in crystallizer 45 for the reaction with the dissolved sodium carbonate.

As previously stated, nearly all the carbon dioxide drawn down into the crystallizer 45 is reacted with the dissolved sodium carbonate contained therein. Unreacted $CO_2$ passes from the surface of said liquid to the freeboard space and it is recycled through perforation 57 in standpipe member 58 for mixture with carbon dioxide gas therein.

Predominantly, single crystals of sodium bicarbonate of controlled size, habit and bulk density can be grown in the process of this invention. This results in material having a bulk density of about 40—70 lbs/ft$^3$ (640—1120 kg/m$^3$) and good flowability.

The following example illustrates this invention.

## Example

Feed tank 36 contained a solution of 12 parts $Na_2CO_3$ and 12 parts $NaHCO_3$ in water at 85°C. The solution was fed to crystallizer 45 continuously at 22.7 litres per minute and the $CO_2$ was fed at 0.27 standard cubic meters per minute. The working volume of the reactor was 681.5 litres and the temperature was controlled at 75°C. During the run, the reactor contained 8 parts $NaHCO_3$ solids in a saturated solution of 8 parts $Na_2CO_3$, 12 parts $NaHCO_3$ and 80 parts water. The reactor was under 8 psig gauge pressure (1.6 kg/sq.cm).

The precipitated sodium bicarbonate slurry was pumped to filter feed tank 84 which was kept at 75°C. The rotary vacuum filter 92 produced 92 kilos of filter cake per hour containing 8 parts water. The saturated mother liquor was pumped to mixing tank 20 where it was heated to 85°C. Sodium carbonate and calcium carbonate were added to mixing tank 20 at 71 kg/hr and 8 gm/hr, respectively. The added $Na_2CO_3$ already contains 35 parts per million (ppm) $Ca^{++}$ ion (on a soda ash basis). The resulting dry $NaHCO_3$ product was determined to contain 50 ppm $CA^{++}$ ion (on a sodium bicarbonate basis).

The overall sodium bicarbonate yield was 90% and the average sieve analysis (U.S. standard sieve) was: +80 mesh — 16%, + 100 mesh — 11%, + 140 mesh — 24%, + 200 mesh — 22%, +325 mesh — 16% and the pan had 11% of the product. The average bulk density was 977 mg/m$^3$. The results are summarized in Table I.

Several other runs were made using the procedure above which shows the relationship of the amount of calcium ion in the product to the product particle size and bulk density. The results are summarized in Table II.

Using the above procedure, additional runs were made to show the effect of crystallizer temperature on the product particle size and bulk density. The results are summarized in Table III.

TABLE I

| Run No. | $CO_2$ Feed Rate Standard Cubic Metre Per Minute | Crystallizer | |
|---|---|---|---|
| | | Temp. °C. | Pressure Psig |
| 1 | .255 | 75 | 8 (1.6 kg/sq. cm) |

| Sodium Bicarbonate Product | | | | | | | |
|---|---|---|---|---|---|---|---|
| $Ca^{++}$ ion Content ppm* | Sieve Analysis | | | | | | Bulk Density kg/m$^3$ |
| | +80 % | +100 % | +140 % | +200 % | +325 % | Pan % | |
| 50 | 16 | 11 | 24 | 22 | 16 | 11 | 977 |

* (on sodium bicarbonate basis)

TABLE II

| Run No. | $CO_2$ Feed Rate Standard Cubic Metre Per Minute | Crystallizer | |
|---|---|---|---|
| | | Temp. °C | Pressure Psig |
| 2A | .255 | 75 | 10 (1.7 kg /sq. cm) |
| 2B | .255 | 75 | 10 (1.7 kg /sq. cm) |
| 2C | .255 | 75 | 10 (1.7 kg /sq. cm) |

| Sodium Bicarbonate Product | | | | | | | |
|---|---|---|---|---|---|---|---|
| $Ca^{++}$ ion Content ppm* | Sieve Analysis | | | | | | Bulk Density $kg/m^3$ |
| | +80 % | +100 % | +140 % | +200 % | +325 % | Pan % | |
| 120 | 32 | 15 | 25 | 14 | 9 | 5 | 1025 |
| 65 | 14 | 12 | 28 | 22 | 14 | 10 | 1009 |
| 45 | 9 | 9 | 27 | 25 | 17 | 13 | 896 |

* (on sodium bicarbonate basis)

TABLE III

| Run No. | $CO_2$ Feed Rate Standard Cubic Metre Per Minute | Crystallizer | |
|---|---|---|---|
| | | Temp. °C | Pressure Psig |
| 3A | .255 | 80 | 12 (1.9 kg/sq.cm) |
| 3B | .255 | 75 | 8 (1.6 kg/sq. cm) |
| 3C | .255 | 65 | 7 (1.5 kg/sq.cm) |

| Sodium Bicarbonate* Product | | | | | | | |
|---|---|---|---|---|---|---|---|
| $Ca^{++}$ ion Content ppm* | Sieve Analysis | | | | | | Bulk Density $kg/m^3$ |
| | +80 % | +100 % | +140 % | +200 % | +325 % | Pan % | |
| 70 | 26 | 17 | 31 | 15 | 7 | 4 | 1041 |
| 65 | 20 | 12 | 26 | 20 | 13 | 9 | 977 |
| 55 | 2 | 3 | 18 | 26 | 26 | 25 | 864 |

* (on sodium bicarbonate basis)

## Claims

1. A process for preparing sodium bicarbonate of controlled crystal size, habit and bulk density by precipitation from (1) an aqueous solution of sodium carbonate and sodium bicarbonate or (2) a slurry of sodium bicarbonate in an aqueous solution of sodium carbonate and sodium bicarbonate, said aqueous solution or said slurry being maintained at a temperature of 50° to 120°C, each containing sufficient $Ca^{++}$ ion so that from about 30 ppm to about 160 ppm $Ca^{++}$ ion (on a sodium bicarbonate basis) is found in the prepared crystals of sodium bicarbonate characterised in that
(a) said solution or said slurry is maintained in an enclosed vessel with an overlying freeboard space closed to the atmosphere,
(b) a gas comprising $CO_2$ is maintained in said freeboard space at a pressure of up to 4.55 kg/sq.cm gauge (50 psig),
(c) said gas comprising $CO_2$ is drawn from said freeboard space by a gas disperser means within said vessel and extending downwardly below the surface of said aqueous solution or said slurry,
(d) said gas is dispersed into said aqueous solution or said slurry as small bubbles for reaction with said sodium carbonate in said aqueous solution or said slurry with said gas disperser means,
(e) mother liquor and crystals of sodium bicarbonate are removed from said vessel and
(f) said crystals are separated from said mother liquor.

2. A process as claimed in claim 1, characterised in that said weight ratio ranges at about 120°C between 16 parts $Na_2CO_3$ to 16 parts $NaHCO_3$ and 10 parts $Na_2CO_3$ to 18 parts $NaHCO_3$.

3. A process as claimed in claim 1, characterised in that the temperature of said aqueous solution or slurry is between 60° to 80°C and the weight ratio of sodium carbonate to the sodium bicarbonate in said aqueous solution ranges at about 60° between 15 parts $Na_2CO_3$ to 8 parts $NaHCO_3$ and 1 part $Na_2HCO_3$ to 13 parts $NaHCO_3$, and at 80°C between 15 parts $Na_2CO_3$ to 10 parts $NaHCO_3$ and 1 part $Na_2CO_3$ to 16 parts $NaHCO_3$.

4. A process as claimed in claim 2 or claim 3 characterised in that 50 ppm to 100 ppm $Ca^{++}$ ion (on a sodium bicarbonate basis) is found in the produced sodium bicarbonate.

5. A process of claim 1 characterised in that the temperature of said aqueous solution or said slurry is at a temperature of 60°C to 80°C.

**Patentansprüche**

1. Verfahren zur Herstellung von Natriumbicarbonat mit kontrollierten Eigenschaften hinsichtlich der Kristallgröße, des Kristallaufbaus und der Schüttdichte durch Ausfällung aus (1) einer wäßrigen Lösung von Natriumcarbonat und Natriumbicarbonat oder (2) einer Aufschlämmung von Natriumbicarbonat in einer wäßrigen Lösung von Natriumcarbonat und Natriumbicarbonat, wobei die wäßrige Lösung oder die Aufschlämmung bei einer Temperatur von 50° bis 120°C gehalten wird, wobei jede genügend $Ca^{++}$-Ionen enthält, damit etwa 30 ppm bis etwa 160 ppm $Ca^{++}$-Ionen (auf Natriumbicarbonatbasis) in den hergestellten Natriumbicarbonatkristallen gefunden werden, dadurch gekennzeichnet, daß man

(a) die Lösung oder die Aufschlämmung in einem verschlossenen Gefäß mit einem darüber liegenden Freiraum, der gegenüber der Atmosphäre abgeschlossen ist, hält,

(b) ein $CO_2$ umfassendes Gas in dem Freiraum mit einem Druck von bis zu 4,55 atü (50 psig) hält,

(c) das $CO_2$ umfassende Gas von dem Freiraum durch eine Gasdispergierungseinrichtung, die innerhalb des Gefäßes angeordnet ist und die sich nach unten unter die Oberfläche der wäßrigen Lösung oder der Aufschlämmung erstreckt, abzieht,

(d) das Gas in der wäßrigen Lösung oder der Aufschlämmung in Form von kleinen Bläschen zur Umsetzung mit dem Natriumcarbonat in der wäßrigen Lösung oder der Aufschlämmung durch die Dispergierungseinrichtung dispergiert,

(e) Mutterlauge und Natriumbicarbonatkristalle aus dem Gefäß entfernt und daß man

(f) die Kristalle von der Mutterlauge abtrennt.

2. Verfahren nach Anspruch 1, dadurch gekennzeichnet, daß das Gewichtsverhältnis bei etwa 120°C zwischen 16 Teilen $Na_2CO_3$ zu 16 Teilen $NaHCO_3$ und 10 Teilen $Na_2CO_3$ zu 18 Teilen $NaHCO_3$ liegt.

3. Verfahren nach Anspruch 1, dadurch gekennzeichnet, daß die Temperatur der wäßrigen Lösung oder der Aufschlämmung zwischen 60° und 80°C liegt und daß das Gewichtsverhältnis von Natriumcarbonat zu Natriumbicarbonat in der wäßrigen Lösung bei etwa 60° sich zwischen 15 Teilen $Na_2CO_3$ zu 8 Teilen $NaHCO_3$ und 1 Teil $Na_2CO_3$ zu 13 Teilen $NaHCO_3$ und bei 80°C zwischen 15 Teilen $Na_2CO_3$ zu 10 Teilen $NaHCO_3$ und 1 Teil $Na_2CO_3$ zu 16 Teilen $NaHCO_3$ erstreckt.

4. Verfahren nach Anspruch 2 oder 3, dadurch gekennzeichnet, daß 50 ppm bis 100 ppm $Ca^{++}$-Ionen (auf Natriumbicarbonatbasis) in dem gebildeten Natriumbicarbonat gefunden werden.

5. Verfahren nach Anspruch 1, dadurch gekennzeichnet, daß die Temperatur der wäßrigen Lösung oder Aufschlämmung 60°C bis 80°C beträgt.

**Revendications**

1. Un procédé de préparation de bicarbonate de sodium avec une dimension des cristaux, un aspect et une masse volumique apparente déterminés par précipitation, soit (1) d'une solution aqueuse de carbonate de sodium et de bicarbonate de sodium, soit (2) d'une bouillie de bicarbonate de sodium dans une solution aqueuse de carbonate de sodium et de bicarbonate de sodium, la solution ou bouillie aqueuse étant maintenue à une température de 50°C à 120°C, chacune contenant assez d'ion $Ca^{++}$ pour qu'une proportion d'ion $Ca^{++}$ comprise entre environ 30 ppm et environ 160 ppm d'ion $Ca^{++}$ (par rapport au bicarbonate de sodium) soit présente dans les cristaux de bicarbonate de sodium préparés, caractérisé en ce que

(a) la solution ou bouillie est maintenue dans un récipient fermé et est surmontée d'un espace libre fermé à l'atmosphère;

(b) dans ledit espace libre, on maintient un gaz comprenant du $CO_2$ sous une pression pouvant aller jusqu'à 4,55 kg/cm² (abs.);

(c) à l'aide d'un dispositif de dispersion du gaz, disposé dans le réacteur et plongeant sous la surface de la solution ou bouillie aqueuse, on aspire le gaz comprenant du $CO_2$ contenu dans l'espace libre;

(d) on disperse ce gaz dans la solution ou bouillie aqueuse sous la forme de fines bulles pour réaction avec le carbonate de sodium contenu dans la suspension ou bouillie aqueuse, à l'aide du dispositif de dispersion du gaz;

(e) on soutire la liqueur-mère et les cristaux de bicarbonate de sodium dudit récipient et

(f) on sépare les cristaux de la liqueur-mère.

2. Un procédé selon la revendication 1, caractérise en ce que les quantités relatives en poids sont comprises à environ 120°C entre 16 parties de $Na_2CO_3$ pour 16 parties de $NaHCO_3$ et 10 parties de $Na_2CO_3$ pour 18 parties de $NaHCO_3$.

3. Un procédé selon la revendication 1, caractérisé en ce que la température de la solution ou bouillie aqueuse est comprise entre 60°C et 80°C et que le rapport en poids du carbonate de sodium

au bicarbonate de sodium dans la solution aqueuse est compris à environ 60°C entre 15 parties de $Na_2CO_3$ pour 8 parties de $NaHCO_3$ et 1 partie de $Na_2CO_3$ pour 13 parties de $NaHCO_3$, et à 80°C entre 15 parties de $Na_2CO_3$ pour 10 parties de $NaHCO_3$ et 1 partie de $Na_2CO_3$ pour 16 parties de $NaHCO_3$.

4. Un procédé selon la revendication 2 ou la revendication 3, caractérisé en ce qu'une proportion de 50 ppm à 100 ppm d'ion $Ca^{++}$ (par rapport au bicarbonate de sodium) est présente dans le bicarbonate de sodium produit.

5. Un procédé selon la revendication 1, caractérisé en ce que la température de la solution aqueuse ou de la bouillie est comprise entre 60°C et 80°C.

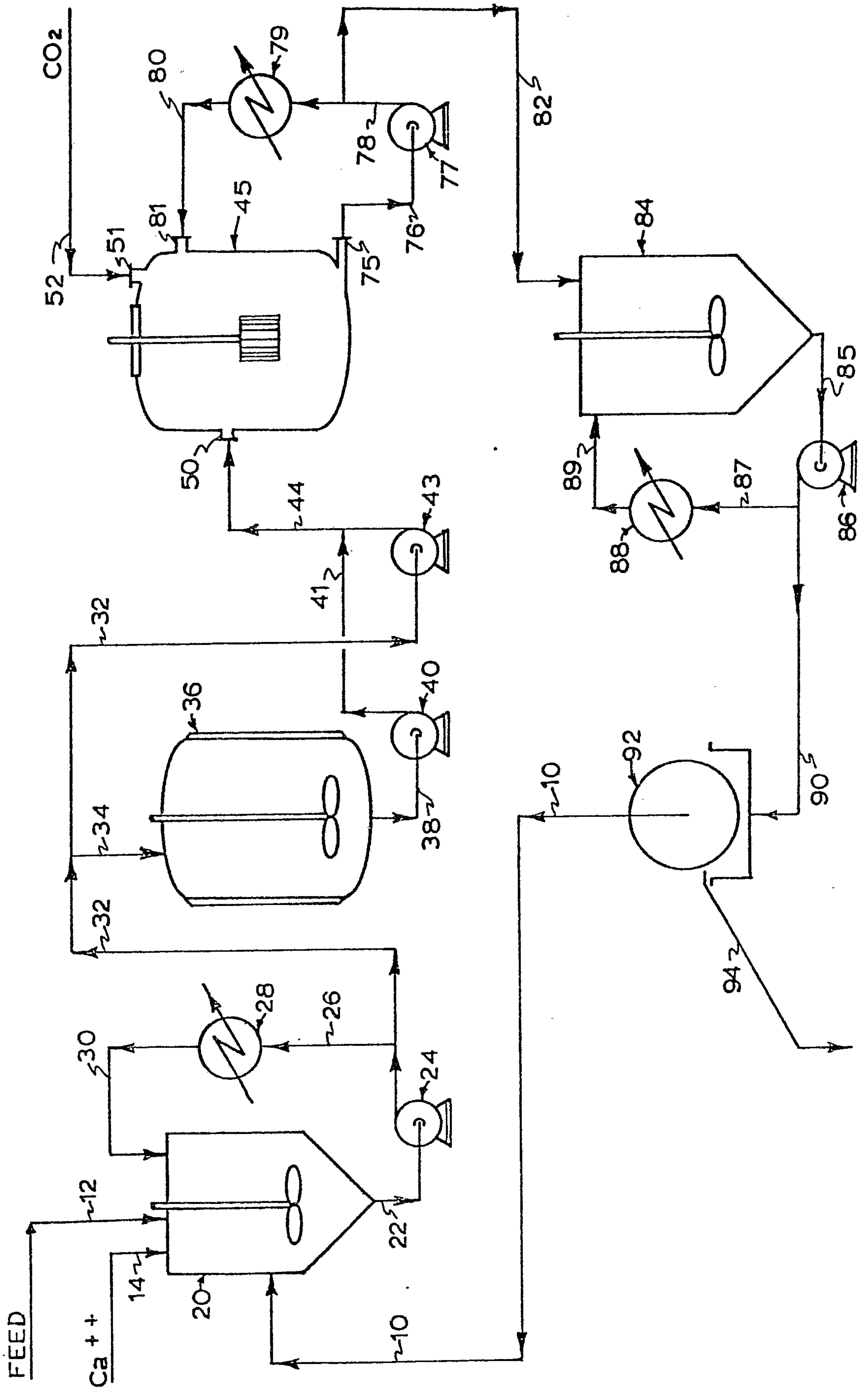
FEED
Ca ++
$CO_2$
10
12
14
20
22
24
26
28
30
32
34
36
38
40
41
43
44
45
50
51
52
75
76
77
78
79
80
81
82
84
85
86
87
88
89
90
92
94

FIG. 1

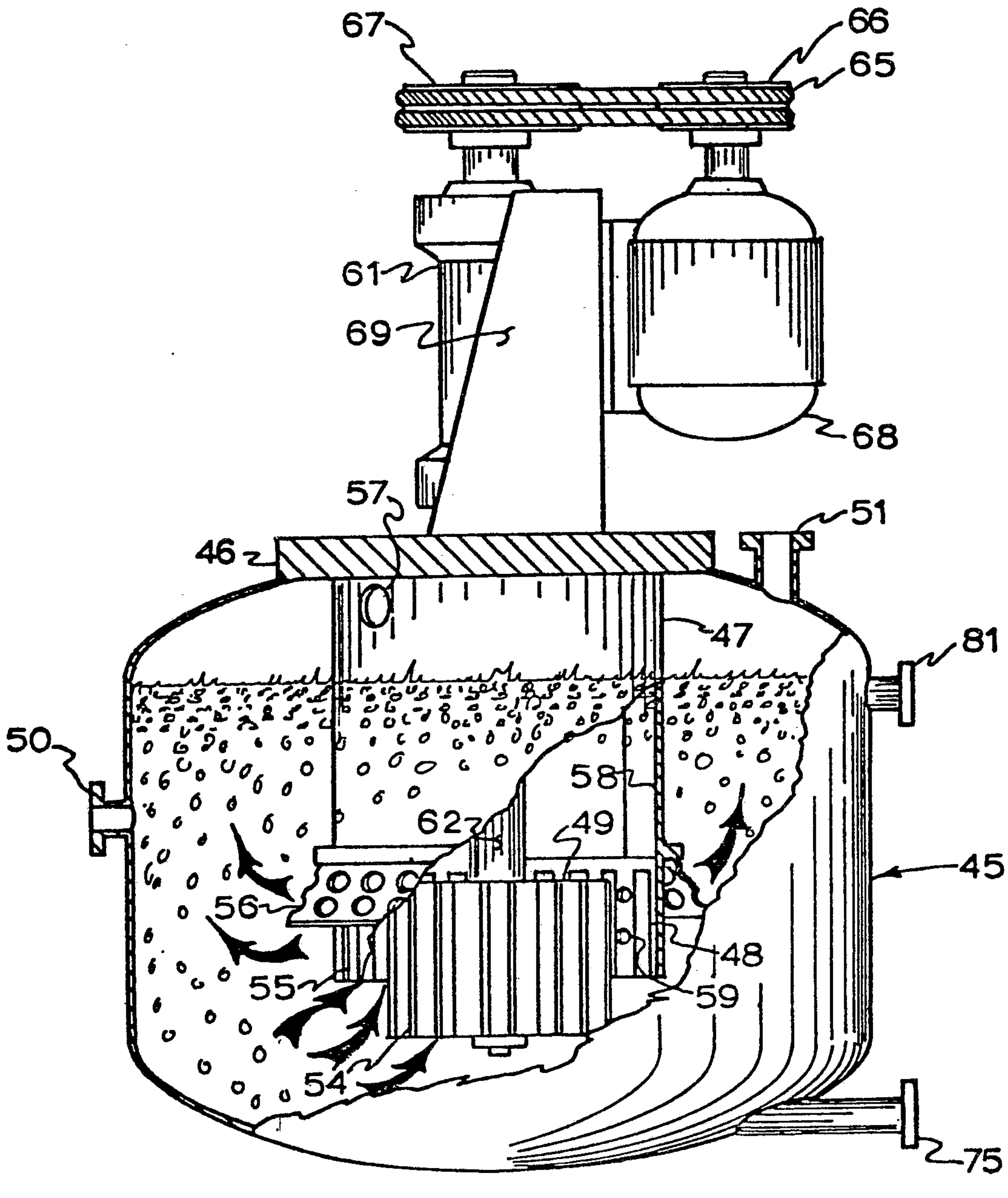


FIG. 2